Europäisches Patentamt

European Patent Office

Office européen des brevets

(11) Numéro de publication: **0 430 870 A1**

# DEMANDE DE BREVET EUROPEEN

(21) Numéro de dépôt: 90810843.4

(22) Date de dépôt: 02.11.90

(51) Int. Cl.5: **A23D 9/00, A23C 19/055, A23C 19/093, A23G 9/02, A23L 1/19**

Une requête en rectification de la page 9, ligne 7 (0,75 en 0,075) et en addition des pages 21a, 21b et 23a (tableaux) a été présentée conformément à la règle 88 CBE. Il est statué sur cette requête au cours de la procédure engagée devant la division d'examen (Directives relatives à l'examen pratiqué à l'OEB, A-V, 2.2).

(30) Priorité: 07.11.89 FR 8914600

(43) Date de publication de la demande:
05.06.91 Bulletin 91/23

(84) Etats contractants désignés:
AT BE CH DE DK ES FR GB GR IT LI LU NL SE
Bulletin

(71) Demandeur: PERRIER-SANTE S.A.
18, rue de Courcelles
F-75008 Paris(FR)

(72) Inventeur: Orizoli, Michel, Résidence du Château
5, Allée des Hêtres, Vaux-Le-Penil
F-77000 Melun(FR)
Inventeur: Platon, Jean-François
335 rue de Vaugirard
F-75015 Paris(FR)
Inventeur: Torres, Dominique, Résidence St.-Eloi
Bât. D- 4ème Etage, Carrefour St.-Eloi
F-12000 Rodez(FR)

(74) Mandataire: Kügele, Bernhard et al
c/o NOVAPAT-CABINET CHEREAU 9, Rue du Valais
CH-1202 Genève(CH)

(54) Phase grasse pour produits alimentaires et matières alimentaires comparables à la crème contenant ladite phase grasse et leur procédé de préparation.

(57) L'invention concerne une phase grasse présentant les teneurs pondérales en acides gras essentiels suivantes :
- de 15 à 60 % de résidus acide linoléique,
- de 2 à 8 % de résidus acide linolénique,
- de 0,3 à 1 % de résidus acide gamma-linolénique,
- de 0,05 à 0,5 % de résidus acide stéaridonique
L'invention a également pour objet une matière alimentaire comparable à une crème contenant la phase grasse sus-mentionnée, ainsi que son procédé de préparation.
L'invention concerne également les produits alimentaires lactés contenant la phase grasse sus-mentionnée et/ou la matière alimentaire susmentionnée.

EP 0 430 870 A1

## PHASE GRASSE POUR PRODUITS ALIMENTAIRES ET MATIERES ALIMENTAIRES COMPARABLES A LA CREME CONTENANT LADITE PHASE GRASSE ET LEUR PROCEDE DE PREPARATION

La présente invention concerne une phase grasse entrant dans la fabrication de produits alimentaires lactés.

Afin de satisfaire la demande des consommateurs, il existe dans le commerce de nombreux produits de remplacement tels que des pâtes à tartiner, des fromages, des crèmes appauvries en matière grasse.

Les études nutritionnelles ont permis de déterminer qu'un apport alimentaire équilibré devait présenter 30 à 35 % de lipides répartis environ de la façon suivante :
- 50 % d'acides gras mono-insaturés,
- 25 % d'acides gras saturés,
- 25 % d'acide gras poly-insaturés.

Soit un rapport acides gras poly-insaturés /acides gras saturés environ de 1.

Le non respect de cette répartition entraîne notamment des problèmes cardio-vasculaires, dont le taux de cholestérol sérique est un marqueur.

Or la matière grasse d'un produit laitier traditionnel contient environ 67 % d'acides gras saturés, 30 % d'acides gras mono-insaturés et 3 % d'acides gras poly-insaturés, elle comporte en outre environ 2500 mg/kg de cholestérol.

Ce sont les huiles végétales qui sont les plus riches en acides gras insaturés et plus particulièrement en acides gras poly-insaturés dont certains sont essentiels au métabolisme.

Les acides linoléique et linolénique sont des acides gras essentiels qui doivent être apportés obligatoirement par voie exogène, car ils ne peuvent pas être synthétisés par l'organisme.

L'acide linoléique est connu depuis longtemps comme un acide gras essentiel indispensable à l'organisme. Dans les pays développés on assiste à un enrichissement de cet acide gras aux dépens des autres acides gras, en particulier de l'acide linolénique, qui est considéré comme un acide gras essentiel depuis les années 1980.

Les acides linoléique et linolénique subissent dans l'organisme une bioconversion en acides gras poly-insaturés à chaîne longue; ces acides gras à longue chaîne sont indispensables pour synthétiser en particulier les trois séries de prostaglandines qui sont des éléments vitaux du métabolisme de l'organisme, et pour le bon fonctionnement de la cellule dont ils sont des constituants de la membrane.

La première étape de la bioconversion de ces deux acides gras essentiels est l'étape limitante de la chaîne de synthèse conduisant aux prostaglandines. Elle a pour but de convertir les acides linoléique et linolénique respectivement en acides gamma-linolénique et stéaridonique sous l'action de l'enzyme delta-6-désaturase. Cette enzyme peut être inhibée par plusieurs facteurs comme les sucres, le tabac, le stress, les processus inflammatoires, la fatigue, le jeûne, l'age, l'absence d'exercice et la vie sédentaire.

L'importance biologique de l'acide gamma-linolénique a conduit à proposer cet acide gras comme agent thérapeutique ou nutritionnel par exemple dans les brevets français N° 2.197.605 et 2.490.631.

Il est donc nécessaire qu'un produit de remplacement présente notamment une teneur en acides gras saturés la plus faible possible et contienne ces acides gras essentiels en quantité et dans des rapports définis.

La présente invention vise précisément à fournir une phase grasse présentant toutes les qualités nutritionnelles requises par la diététique et entrant dans la fabrication de produits alimentaires lactés.

La phase grasse de l'invention contient au moins une huile végétale et est caractérisée en ce qu'elle présente les teneurs pondérales en acides gras essentiels suivantes :
- de 15 à 60 % de résidus acide linoléique,
- de 2 à 8 % de résidus acide linolénique.
- de 0,3 à 1 % de résidus acide gamma-linolénique.
- de 0,05 à 0,5 % de résidus acide stéaridonique.

La présence simultanée de ces quatres acides gras essentiels permet de palier une carence nutritionnelle et, en cas d'absence ou d'inactivation de l'enzyme delta-6-désaturase permet d'assurer un apport en précurseurs de la synthèse des prostaglandines et permet d'assurer les échanges cellulaires.

Avantageusement, au moins 70 % et de préférence 100 % des acides gras mono-insaturés et poly-insaturés de la phase grasse de l'invention sont totalement en cis.

Les acides gras cis passent plus facilement la barrière intestinale du fait d'une plus grande fluidité que celle des acides gras trans. D'un point de vue nutritionnel les acides gras trans sont équivalents à des acides gras saturés.

De préférence, le rapport acide linoléique/acide linolénique est compris entre 5 et 12 et de préférence 8.

Cette présence simultanée des acides linoléique et linolénique dans un rapport particulier est indispensable pour ne pas favoriser l'une des chaînes de bioconversion au détriment de l'autre.

La phase grasse de l'invention comprend au moins une huile végétale choisie parmi :
- une huile (a) riche en résidus acide linoléique,
- une huile (b) riche en résidus acide linolénique,
- une huile (c) riche en résidus acide gamma-linolénique,
- une huile (d) riche en résidus acide stéaridonique.

De manière avantageuse, les huiles (a), (b), (c) et (d) sont choisies de la façon suivante :
- l'huile (a) est choisie parmi les huiles de carthame, de pépins de raisin, de tournesol, de noix, de germes de maïs, de germes de blé, de soja, d'onagre ou un mélange de celles-ci,
- l'huile (b) est choisie parmi les huiles de colza, de noix, de pépins de. cassis, de soja, de germes de blé, de navette, de lupin ou un mélange de celles-ci,
- l'huile (c) est choisie parmi les huiles de pépins de cassis, d'onagre, de bourrache, de groseilles à maquereaux ou un mélange de celles-ci,
- l'huile (d) est choisie parmi les huiles de pépins de cassis, de groseilles à maquereaux ou un mélange de celles-ci.

Spécialement, l'invention a pour objet les phases grasses précisées dans les exemples suivants :

Dans ces exemples ainsi que dans les revendications, les acides gras seront représentés par la formule Cx:y n-z, dans laquelle x représente le nombre de carbone, y représente le nombre de double liaisons et n-z représente la position de la première double liaison dans ce composé.

**- exemple 1 :**

Phase grasse constituée d'un mélange de 40 % d'huile de coton totalement hydrogénée, de 50 % d'huile de soja raffinée, intéréstérifiées au hasard et de 4% d'huile de pépins de cassis.

Sa composition pondérale en acides gras est la suivante :

| | |
|---|---|
| C 12:0 | 0 à 0,6 % |
| C 14:0 | 0 à 0,8 % |
| C 15:0 | 0 à 0,1 % |
| C 16:0 | 15 à 18 % |
| C 16:1 | |
| C 17:0 | 0 à 0,5 % |
| C 17:1 | |
| C 18:0 | 30 à 35 % |
| C 18:1 | 13 à 15 % |
| C 18:2 n-6   (acide linoléique) | 30 à 34 % |
| C 18:3 n-3 (acide linolénique) | 3,5 à 6 % |
| C 18:3 n-6 (acide gamma linolénique) | 0,5 à 0,8 % |
| C 20:0 | 0 à 0,5 % |
| C 20:1 | 0 à 0,1 % |
| C 22:0 | 0 à 0,5 % |
| C 18:4 n-3 (acide stéaridonique) | 0,1 à 0,16 % |

Le niveau d'acide gras cis dans la matière grasse est d'environ 100 %.

Le rapport acide linoléique / acide linolénique est compris entre 6 et 9,5.

Les teneurs en solides obtenues à diverses températures par des mesures de résonance magnétique nucléaire sont :

| | | |
|---|---|---|
| 15°C | 30 % | |
| 20°C | 27 % | ± 3% |
| 25°C | 22,5 % | |
| 30°C | 17,5 % | |
| 35°C | 14,3 % | |
| 40°C | 9,6 % | ± 1% |

- **exemple 2 :**

Phase grasse constituée d'un mélange interestérifié de 60 % concret de palme, de 36 % d'huile de soja raffinée et de 4 % d'huile de pépins de cassis.

Sa composition pondérale en acides gras est la suivante :

| | |
|---|---|
| C 12:0 | 0 à 2 % |
| C 14:0 | 0,5 à 1,5 % |
| C 15:0 | 0 à 0,5 % |
| C 16:0 | 36 à 40 % |
| C 16:1 | |
| C 17:0 | 0 à 0,5 % |
| C 17:1 | |
| C 18:0 | 3 à 6 % |
| C 18:1 | 25 à 29 % |
| C 18:2 n-6 (acide linoléique) | 21 à 26 % |
| C 18:3 n-3 (acide linolénique) | 2 à 5 % |
| C 18:3 n-6 (acide gamma linolénique) | 0,5 à 0,8 % |
| C 20:0 | 0 à 0,5 % |
| C 20:1 | 0 à 0,5 % |
| C 22:0 | 0 à 0,5 % |
| C 18:4 n-3 (acide stéaridonique) | 0,1 à 0,16 % |

Le niveau d'acide gras cis dans la matière grasse est d'environ 100 %.

Le rapport acide linoléique / acide linolénique est compris entre 5,5 et 12.

Les teneurs en solides obtenues à diverses températures par des mesures de résonance magnétique nucléaire sont :

| | | |
|---|---|---|
| 0°C | 43 – 55 % | |
| 15°C | 30 – 40 % | |
| 20°C | 19 – 29 % | ± 3% |
| 25°C | 15 – 20 % | |
| 30°C | 8 – 15 % | |
| 35°C | 6 – 10 % | |
| 40°C | 3 – 6 % | ± 1% |

- **exemple 3 :**
Phase grasse constituée de 96 % d'huile de soja et de 4 % d'huile de pépins de cassis raffinées par démucilagination, neutralisation, décoloration et désodorisation sous vide et de 4 % d'huile de pépins de cassis.

Sa composition pondérale en acides gras est la suivante :

| | |
|---|---|
| C 12:0 | traces |
| C 14:0 | 0 à 0,1 % |
| C 15:0 | traces |
| C 16:0 | 8 à 13 % |
| C 16:1 | |
| C 17:0 | 0 à 0,5 % |
| C 17:1 | |
| C 18:0 | 2,5 à 4,5 % |
| C 18:1 | 19 à 25 % |
| C 18:2 n-6 (acide linoléique) | 50 à 60 % |
| C 18:3 n-3 (acide linolénique) | 5,5 à 11 % |
| C 18:3 n-6 (acide gamma linolénique) | 0,5 à 0,8 % |
| C 20:0 | traces |
| C 20:1 | traces |
| C 22:0 | traces |
| C 18:4 n-3 (acide stéaridonique | 0,1 à 0,16 % |

Le niveau d'acide gras cis dans la matière grasse est d'environ 100 %.
Le rapport acide linoléique / acide linolénique est compris entre 5 et 11.

- **exemple 4 :**
Phase grasse constituée d'un mélange comprenant 50 % de la phase grasse de l'exemple 1 et 50 % de la phase grasse de l'exemple 3.

Sa composition pondérale en acides gras est la suivante :

| | |
|---|---|
| C 12:0 | 0 à 0,3 % |
| C 14:0 | 0 à 0,4 % |
| C 15:0 | traces |
| C 16:0 | 11 à 16 % |
| C 16:1 | |
| C 17:0 | 0 à 0,5 % |
| C 17:1 | |
| C 18:0 | 16 à 20 % |
| C 18:1 | 16 à 21 % |
| C 18:2 n-6 (acide linoléique) | 40 à 50 % |
| C 18:3 n-3 (acide linolénique) | 5 à 9 % |
| C 18:3 n-6 (acide gamma linolénique) | 0,5 à 0,8 % |
| C 20:0 | 0 à 0,3 % |
| C 20:1 | 0 à 0,05 % |
| C 22:0 | 0 à 0,2 % |
| C 18:4 n-3 (acide stéaridonique) | 0,1 à 0,16 % |

Le niveau d'acide gras cis dans la matière grasse est d'environ 100 %.

Le rapport acide linoléique / acide linolénique est compris entre 5,5 et 11.

Les teneurs en solides obtenues à diverses températures par des mesures de résonance magnétique nucléaire sont :

| | | |
|---|---|---|
| 0 °C | 17,5 – 23,5 % | |
| 15°C | 14 – 20 % | |
| 20°C | 8,5 – 14,5 % | à ± 3 % |
| 25°C | 3,5 – 9,5 % | |
| 30°C | 2,5 – 4,5 % | |
| 35°C | 2,5 – 4,5 % | à ± 1 % |
| 40°C | 0 – 2 % | |

**- exemple 5 :**

Phase grasse constituée d'un mélange comprenant 75 % de la phase grasse de l'exemple 2 et 25 % de stéarine de palmiste.

Sa composition pondérale en acides gras est la suivante :

| | |
|---|---|
| C 12:0 | 13 à 17 % |
| C 14:0 | 4 à 8 % |
| C 15:0 | 0 à 0,5 % |
| C 16:0 | 30 à 34 % |
| C 16:1 | |
| C 17:0 | 0 à 0,5 % |
| C 17:1 | |
| C 18:0 | 3 à 5 % |
| C 18:1 | 20 à 44 % |
| C 18:2 n-6 (acide linoléique) | 15 à 20 % |
| C 18:3 n-3 (acide linolénique) | 1,5 à 4 % |
| C 18:3 n-6 (acide gamma linolénique) | 0,37 à 0,60 % |
| C 20:0 | 0 à 0,5 % |
| C 20:1 | 0 à 0,3 % |
| C 22:0 | 0 à 0,5 % |
| C 18:4 n-3 (acide stéaridonique) | 0,75 à 0,12 %. |

Le niveau d'acide gras cis dans la matière grasse est d'environ 100%.

Le rapport acide linoléique/acide linoléique est compris entre 7 et 11.

Les teneurs en solides obtenues à diverses températures par des mesures de résonance magnétique nucléaire sont :

| | | |
|---|---|---|
| 0 °C | 58 à 64 % | |
| 15°C | 40 à 46 % | |
| 20°C | 25 à 30 % | ± 3% |
| 25°C | 10 à 15 % | |
| 30°C | 5 à 10 % | |
| 35°C | 3 à 6 % | ± 1% |
| 40°C | 0 à 1 % | |

Selon une forme de réalisation toute particulière de l'invention, la phase grasse comprend au moins une huile végétale et au moins une huile d'origine animale.

Parmi les huiles d'origine animale, on préfère particulièrement les huiles de poissons comme l'huile de sardine, de morue ou de menhaden riche en acide gras poly-insaturé de série n-3.

La phase grasse de l'invention peut comprendre en outre au moins un additif choisi dans le groupe consistant notamment en un agent anti-oxygène, un colorant, un arôme, un émulsifiant, des vitamines.

Avantageusement le ou les agents anti-oxygènes sont choisis parmi notamment les tocophérols, le palmitate d'ascorbyle.

L'invention concerne également une matière alimentaire comparable à une crème, contenant au moins une phase grasse telle que définie plus haut ou un mélange de celles-ci. Certaines desdites matières alimentaires entrant dans la préparation de produits alimentaires lactés divers tels que des fromages, des desserts lactés, des pâtes fraîches etc...

L'invention a plus particulièrement pour objet les matières alimentaires décrites dans les exemples qui

7

suivent :

**- exemple 6 :**
Matière alimentaire à environ 30 % de matière grasse, pour la fromagerie.

On prépare la matière alimentaire de la façon suivante :
- On chauffe à une température comprise entre 50 et 90° Celsius une phase grasse végétale constituée de 50 à 100 % de la phase grasse de l'exemple 3, de 0 à 50 % des phases grasses des exemples 1 ou 2 et comportant en outre un émulsifiant;
- on mélange, sous atmosphère inerte, à une température de 50 à 90° Celsius, la phase grasse précédente avec du lait écrémé frais chauffé à une température comprise entre 50 et 90° Celsius ;
- on homogénéise le mélange porté à une température comprise entre 50 et 90° Celsius en le soumettant à une pression comprise entre 0 et 150 bar,
- on soumet le mélange à une pasteurisation à une température d'environ 90° Celsius pendant une durée de 10 à 40 secondes,
- on refroidit le mélange à une température de 4° à 6° Celsius.

La matière alimentaire obtenue est en tout point comparable à une crème et présente un pH compris entre 6,55 et 6,80, une acidité comprise entre 9 et 11° Dornic, un extrait sec total compris entre 36 et 37 % et contient environ 30 % de matière grasse dont la composition pondérale en acides gras présente les caractéristiques suivantes :
ACIDES GRAS SATURES : 13 à 38 %
ACIDES GRAS MONO-INSATURES : 18 à 26 %
ACIDES GRAS POLY-INSATURES : 43 à 66 %
dont
- acide linoléique : 39 à 56 %
- acide linolénique : 4 à 9 %
- acide gamma linolénique : 0,5 à 0,8 %
- acide stéaridonique : 0,1 à 0,16 %
soit un rapport acide linoléique / acide linolénique compris entre 7 et 9.

**- exemple 7 :**
Matière alimentaire à environ 35 à 45 % de matière grasse, pour la préparation de desserts lactés, de laits fermentés ou de pâtes fraîches.

On prépare la matière alimentaire de la façon suivante :
- on chauffe à une température comprise entre 50 et 90° Celsius la phase grasse de l'exemple 3,
- on mélange sous atmosphère inerte, à une température comprise entre 50 et 90° Celsius et en présence d'un émulsifiant les phases grasses précédentes avec un mélange de lait écrémé et éventuellement de bêta carotène chauffé également à une température comprise entre 50 et 90° Celsius,
- on homogénéise le mélange porté à une température comprise entre 50 et 90° Celsius en le soumettant à une pression de 0 à 150 bar.
- on soumet le mélange obtenu à une' pasteurisation à 95° Celsius pendant une durée de 40 secondes,
- on refroidit le mélange à une température de 4° à 6° Celsius.
- le stockage est effectué préférentiellement sous atmosphère inerte et à une température de 4° Celsius.

La matière alimentaire obtenue est en tout point comparable à une crème et présente un pH compris entre 6,70 et 6,80, une acidité comprise entre 10 et 12° Dornic, un extrait sec total compris entre 40 et 51 % et contient environ 35 à 45 % de matière grasse dont la composition pondérale en acides gras présente les caractéristiques suivantes :
ACIDES GRAS SATURES : 12 à 15 %
ACIDES GRAS MONO-INSATURES : 20 à 25 %
ACIDES GRAS POLY-INSATURES : 60 à 65 %
dont
- acide linoléique : 50 à 60 %
- acide linolénique : 5,5 à 11 %
- acide gamma linolénique : 0,5 à 0,8 %
- acide stéaridonique : 0,10 à 0,16 %

soit un rapport acide linoléique / linolénique compris entre 6 et 10.

**- exemple 8 :**
Matière alimentaire à environ 30 à 35 % de matière grasse, pour la préparation de matières alimentaires foisonnées.

On prépare la matière alimentaire de la façon suivante :
- après avoir fait fondre les concrets d'un mélange constitué de 15 à 35 % de stéarine de palmiste et de 65 à 85 % de la phase grasse de l'exemple 2, et on les mélange avec un ou plusieurs additifs précédemment définis et l'on chauffe à une température comprise entre 50 et 90° Celsius ;
- on mélange le produit précédent, sous atmosphère inerte et à une température comprise entre 50 et 90° Celsius, à un mélange effectué à froid puis chauffé à une température comprise entre 50 et 90° Celsius de lait écrémé, de sucre, de gélifiant, d'arôme, de stabilisant, d'épaississant et éventuellement d'autre additifs ;
- on homogénéise le mélange porté à une température comprise entre 50 et 90° Celsius en le soumettant à une pression de 0 à 150 bar.
- on soumet le mélange obtenu à une pasteurisation à une température comprise entre 90 et 110° Celsius pendant une durée comprise entre 20 et 80 secondes.
- on refroidit le mélange à une température de 4° à 6 Celsius.
- le stockage est effectué préférentiellement sous atmosphère inerte et à une température de 4° à 6 Celsius.
La matière alimentaire obtenue est en tout point comparable à une crème et présente un pH compris entre 6,60 et 6,70, une acidité comprise entre 10 et 12° Dornic, un extrait sec total compris entre 43 et 48 %, elle contient environ 30 à 35 % de matières grasses dont la composition pondérale en acides gras présente les caractéristiques suivantes :
ACIDES GRAS SATURES : 52 à 65 %
ACIDES GRAS MONO-INSATURES : 12 à 25 %
ACIDES GRAS POLY-INSATURES : 16 à 28 %
dont
- acide linoléique : 15 à 25 %
- acide linolénique : 0,8 à 4 %
- acide gamma linolénique : 0,37 à 0,60 %
- acide stéaridonique : 0,075 à 0,12 %
soit un rapport acide linoléique / linolénique compris entre 6,5 et 9.

**- exemple 9 :**
Matière alimentaire comparable à une crème douce U.H.T. à environ 35 % de matières grasses.

On prépare la matière alimentaire de la façon suivante :
- on chauffe à une température comprise entre 50 et 90° Celsius un matière conforme à l'exemple 8 et comportant un ou plusieurs additifs choisis parmi des émulsifiants, des stabilisants, des agents anti-oxygène ;
- on mélange à une température comprise entre 50 et 90° Celsius, la matière alimentaire précédente avec du lait écrémé frais également chauffé à une température comprise entre 50 et 90° Celsius,
- on homogénéise le mélange porté à une température comprise entre 50 et 90° Celsius en le soumettant à une pression de 0 à 150 bar,
- on soumet le mélange à une pasteurisation à une température comprise entre 90 et 110° Celsius pendant une durée de 10 à 40 secondes,
- on refroidit le mélange à une température de 4° à 6° Celsius,
- on soumet la matière alimentaire obtenue à un traitement U.H.T. consistant en un préchauffage indirect de 60 à 80° Celsius, une stérilisation par chauffage direct ou indirect jusqu 'à amener le produit à environ 150° Celsius, puis un refroidissement soit par expansion sous vide partiel, soit par échange indirect, jusqu'à amener le produit à une température de 50 à 90° Celsius.
- une fois la matière ramenée à une température de 50 à 90° Celsius, on la soumet à une homogénéisation aseptique sous une pression de 0 à 150 bar.
- on refroidit la matière alimentaire jusqu'à une température comprise entre 5 et 18° Celsius,
- le conditionnement est aseptique et le stockage effectué préférentiellement à une température de 15° Celsius.

La matière alimentaire obtenue est en tout point comparable à une crème douce U.H.T. et présente un pH compris entre 6,55 et 6,80, une acidité comprise entre 8 et 12° Dornic, un extrait sec total compris entre 43 et 46 % et contient environ 35 % de matières grasses dont la composition pondérale en acides gras présente les caractéristiques suivantes :

ACIDES GRAS SATURES : 52 à 65 %

ACIDES GRAS MONO-INSATURES : 12 à 25 %

ACIDES GRAS POLY-INSATURES : 16 à 28 %

dont :

- acide linoléique : 15 à 25 %
- acide linolénique : 0,8 à 4 %
- acide gamma linolénique : 0,37 à 0,60 %
- acide stéaridonique : 0,075 à 0,12 %

soit un rapport acide linoléique / acide linolénique compris entre 6,5 et 9 .

Les matières alimentaires de l'invention sont obtenues selon deux procédés l'un discontinu, l'autre continu.

Le procédé discontinu consiste à effectuer les étapes suivantes :

**a** - on mélange dans une cuve les deux phases suivantes :

- une phase aqueuse constituée par du lait écrémé ou partiellement écrémé, pasteurisé ou microfiltré et/ou de la crème laitière crue ou pasteurisée, contenant éventuellement un ou plusieurs additifs comme des arômes, du sucre des agents gélifiants, épaississants, stabilisants ou colorants..

- une phase grasse constituée d'une matière grasse conforme à l'invention.

Le mélange est assuré par dispositif qui permet une dispersion de l'huile sous forme de fines gouttelettes dont la taille varie de 5 à 30 microns.

**b** - on homogénéise le mélange ramené à une température comprise entre 50 et 90° Celsius, en le soumettant à une pression comprise entre 0 et 150 bar.

**c** - on soumet ledit mélange à une pasteurisation à une température comprise entre 90 et 110° Celsius pendant. une durée comprise entre 10 et 50 secondes, ou a une température comprise entre 100 et 120° Celsius pendant une durée d'environ 80 secondes.

**d** - on refroidit le mélange à une température d'environ 4° à 6° Celsius.

Ce procédé permet d'obtenir une répartition de la taille des globules gras dans une plage de 1 à 10 microns.

De manière avantageuse, les étapes (**a**) et (**d**) du procédé ainsi que le stockage sont effectués sous atmosphère inerte afin d'éviter une oxydation des produits au cours du procédé.

La matière alimentaire de l'invention peut également être préparée selon un procédé dans lequel le mélange des deux phases est effectué en continu, la préparation des phases aqueuses et grasses restant la même que dans le procédé discontinu.

Selon ce deuxième procédé la phase grasse est injectée en continu, dans les proportions désirées dans le flux de phase aqueuse. Le flux des deux phases passe dans un mélangeur en continu qui peut être statique ou dynamique. Ce mélangeur produit en continu une émulsion stable à l'abri de l'oxygène. Le mélangeur peut être couplé à un système complémentaire d'homogénéisation

L'invention a encore pour objet les produits alimentaires lactés préparés à partir d'au moins une matière alimentaire et/ou d'au moins une phase grasse définie précédemment. Parmi les produits alimentaires lactés contenant au moins une phase grasse conforme à l'invention et/ou au moins une matière alimentaire conforme à l'invention, on peut citer : Les produits alimentaires en tous points comparables à des fromages frais natures ou aromatisés, des gélifiés vanille ou chocolat, des mousses, des flans, des liégeois café ou chocolat ou fruit, des desserts vanille ou chocolat ou fruits, des laits fermentés ou encore des fromages à pâtes pressées ou persillées.

A titre d'exemple de produits alimentaires selon l'invention on peut citer les produits des exemples suivants :

**- exemple 10 :**

Produit alimentaire comparable à un fromage de type Cheddar, préparé comme suit :

On prépare la phase grasse de l'exemple 4. Puis la matière alimentaire de l'exemple 6.

On mélange à une température comprise entre 30 et 32° Celsius la matière alimentaire précédente avec du lait écrémé soumis à une pasteurisation à 70° Celsius pendant 20 secondes auquel on a ajouté 0,05 à 0,2 g/l de $CaCl_2$, 0,08 à 0,15 g/l de Rocou, le mélange ayant une teneur en matière grasse de 3 à 3,5 %.

On soumet le mélange à l'action de ferments lactiques mésophiles homofermentaires et/ou hétérofermentaires, à raison de 10 à 30 g/100 l. On laisse maturer environ 20 minutes.

On emprésure le mélange à raison de 27 à 32 ml/100 l de présure, à une température comprise entre 30 et 32° Celsius .

On laisse coaguler pendant 30 à 40 minutes.

On soumet le mélange à un décaillage , puis à un soutirage d'environ 30 % du sérum .

On chauffe le mélange à une température comprise entre 38 et 40° Celsius pendant une durée de 20 à 30 minutes, puis on le soumet à cette même température à un brassage pendant une durée de 40 à 50 minutes.

Le mélange est soutiré en bac de drainage.

On effectue la Cheddarisation pendant 5 à 6 heures.

Le fromage est découpé puis soumis à un salage d'une durée de 30 minutes à 1 heure et à un pressage de 24 à 48 heures à une température de 10 à 15° Celsius.

Le fromage subit un affinage d'une durée de 2 à 4 mois à une température comprise entre 8 et 10° Celsius et une humidité compris entre 90 et 92 %.

Le produit fini présente un pH compris entre 5,30 et 5,40 ,un extrait sec total compris entre 62 et 63 %, un rapport gras sur sec compris entre 50 et 52 % et sa composition pondérale en acides gras présente les caractéristiques suivantes :

ACIDES GRAS SATURES : 13 a 38 %

ACIDES GRAS MONO-INSATURES : 18 à 26 %

ACIDES GRAS POLY-INSATURES : 44 à 65 %

dont :

- acide linoléique : 39 à 56 %
- acide linolénique : 4 à 9 %
- acide gamma linolénique : 0,5 à 0,8 %
- acide stéaridonique : 0,10 a 0,16 %

soit un rapport acide linoléique / acide linolénique compris entre 7 et 9.

**Exemple 11 :**

Produit alimentaire comparable à un fromage blanc battu à 40 % de gras sur sec.

On prépare la phase grasse de l'exemple 3, puisla matière alimentaire de l'exemple 7.

Selon une technologie connue de l'homme de l'art, on prépare le fromage blanc maigre à partir d'un lait cru entier qui est totalement écrémé, pasteurisé de 70 à 90° Celsius pendant une durée comprise entre 30 secondes et 4 minutes. Ce lait est refroidi à une température comprise entre 20° et 30° Celsius puis additionné de ferments lactiques mésophiles et de présure. Le lait est maintenu à cette température pendant 15 à 20 heures jusqu'à l'obtention d'un ph inférieur à 4,5. Le coagulum est alors brassé puis égoutté sur un séparateur centrifuge à une température comprise entre 30 et 50° Celsius et refroidi à une température comprise entre 10 et 15° Celsius.

On incorpore la matière alimentaire de l'exemple 7 en continu de façon à obtenir soit de la pâte à 40 % de gras sur sec, soit de la pâte à 30 % de gras sur sec.

La pâte réengraissée est ensuite refroidie à une température comprise entre 4 et 6° Celsius et stockée en silo sous atmosphère inerte.

La pâte à 40 % de gras sur sec peut être conditionnée en pots de 100 g, 500 g ou 1kg sous atmosphère inerte.

Le produit alimentaire obtenu présente un pH compris entre 4,40 et 4,60, un extrait sec total compris entre 20 et 22 %, un rapport gras sur sec compris entre 40 et 42 % et sa composition pondérale en acides gras présente les caractéristiques suivantes :

ACIDES GRAS SATURES : 10,5 à 18,5 %

ACIDES GRAS MONO-INSATURES : 19 à 25 %

ACIDES GRAS POLY-INSATURES : 55 à 70 %

dont :

- acide linoléique : 50 à 60 %
- acide linolénique : 5,5 à 11 %
- acide gamma linolénique : 0,5 a 0,8 %
- acide stéaridonique : 0,10 à 0,16 %

Soit un rapport acide linoléïque / acide linolénique compris entre 6 et 9.

**Exemple 12 :**
Produit alimentaire comparable à un fromage aromatisé avec des pulpes de fruits sur sucre où édulcorant à 30 % de gras sur sec.

On prépare la phase grasse de l'exemple 3, puis la matière alimentaire de l'exemple 7.

On prépare le fromage blanc maigre comme à l'exemple 11.

La pâte à 30 % de gras sur sec est additionnée de pulpe de fruit et de sucre puis conditionnée en pots de 100 g sous atmosphère inerte.

Le produit alimentaire obtenu présente un pH compris entre 4,40 et 4,60, un extrait sec total compris. entre 26,5 et 28 %, un rapport gras sur sec compris entre 30 et 35 % et sa composition pondérale en acides gras présente les caractéristiques suivantes :

ACIDES GRAS SATURES : 10,5 à 18,5 %

ACIDES GRAS MONO-INSATURES : 19 à 25 %

ACIDES GRAS POLY-INSATURES : 55 à 70 %

dont :
- acide linoléique : 50 à 60 %
- acide linolénique : 5,5 à 11 %
- acide gamma linolénique : 0,5 à 0,8 %
- acide stéaridonique : 0,10 à 0,16 %

Soit un rapport acide linoléïque / acide linolénique compris entre 6 et 9.

**Exemple 13 :**
Produit alimentaire comparable à un fromage blanc battu à 40 % de gras sur sec.

On prépare selon le même schéma technologique suivi dans l'exemple 11 un produit alimentaire identique sauf en ce qui concerne la nature de la phase grasse et par conséquent de la matière alimentaire.

La phase grasse est composée de 70 % de la phase grasse de l'exemple 3 et de 30 % de matière grasse d'origine butyrique.

Le produit alimentaire obtenu présente un pH compris entre 4,40 et 4,60, un extrait sec total compris entre 20 et 22 %, un rapport gras sur sec compris entre 40 èt 42 % et sa composition pondérale en acides gras présente les caractéristiques suivantes :

ACIDES GRAS SATURES : 23,5 à 36 %

ACIDES GRAS MONO-INSATURES : 20,0 à 28,5 %

ACIDES GRAS POLY-INSATURES : 40 à 50 %

dont :
- acide linoléique : 36 à 43 %
- acide linolénique : 4 à 8 %
- acide gamma linolénique : 0,5 à 0,8 %
- acide stéaridonique : 0,10 à 0,16 %

Soit un rapport acide linoléïque / acide linolénique compris entre 6 et 9.

Parmi les produits alimentaires lactés contenant au moins une phase grasse conforme à l'invention et/ou au moins une matière alimentaire conforme à l'invention, on peut encore citer les produits alimentaires en tous points comparables à des mélanges prêts à glacer correspondants à la définition des glaces et crèmes glacées avec au minimum pour 100 g de produit fini, soit 7 g de matières grasses pour les crèmes glacées aux aromes natures, soit 5 g de matières grasses pour les crèmes glacées aux fruits ou au jus de fruit. Ces produits peuvent être soit à l'état de mix prêts à glacer (préparation pour glaces et crèmes glacées) conditionnés ou en vrac, stérilisés ou pasteurisés, soit à l'état de produits prêts à la consommation à l'état surgelé.

Une étude a été réalisée afin d'évaluer l'effet d'une modification des matières grasses d'un produit de consommation courante sur les lipides sanguins.

L'étude a été effectuée sur un groupe de 27 hommes normolipidiques en population fermée, vivant dans une communauté religieuse rurale.

Les sujets ont consommés successivement deux produits alimentaires lactés, durant un mois chacun, à raison de 200 g par jour. Pour ne pas modifier leur ration calorique, la consommation des produits alimentaires lactés venait à la place d'une consommation équivalente de produits laitiers (lait, yaourt, fromage blanc ou autres fromages) qui leur a été individuellement précisée.

Le premier produit alimentaire lacté était celui de l'exemple 13, dénommé dans les tableaux ci-après produit 1; le second produit alimentaire lacté, dénommé dans les tableau ·ci-après produit 2, était un fromage blanc traditionnel dont les matières grasses étaient celles habituelles du lait. Le taux de gras sur sec total pour les deux produits était de 40 %.

L'analyse de la composition en acides gras des deux produits alimentaires lactés est donnée dans le tableau 1 ci-dessous.

Les lipides des produits alimentaires lactés représentaient 19 % des lipides totaux de la ration, la répartition des acides gras dans la ration alimentaire au cours des deux périodes de 1 mois est donnée dans le tableau 2 ci-dessous.

Un bilan clinique et biologique a été pratiqué au début et à la fin de chacune des deux périodes d'un mois. Le prélèvement sanguin était effectué par ponction veineuse, le matin chez le sujet à jeun depuis la veille au soir. Après décantation, le sérum était isolé et placé à 4 ° Celsius.

Les lipides sériques suivants ont été mesurés :
- cholestérol total.
- cholestérol des HDL, après précipitation sélective des VLDL et LDL par le dextran-magnésium, selon la méthode à la catalase.
- cholestérol des LDL calculé selon la formule de Friedewald.
- apoprotéines AI et B, par immunonéphélométrie laser.
- triglycérides, par une méthode colorimétrique enzymatique.

Les acides gras des fractions lipidiques sériques ont été analysés par la méthode suivante : les lipides sériques étaient extraits avec le chloroforme/méthanol (2/1, v/v) selon Folch; puis séparés par chromatographie en couche mince sur gel de silice. Le solvant était un mélange d'éther/diéthyl éther/acide acétique (90/30/1, v/v/v) . Chaque fraction lipidique était identifiée après coloration à la rhodamine et comparaison avec les standards connus. L'acide heptadécanoïque était ajouté à chaque fraction recueillie comme standard interne et les fractions étaient transméthylées avec une solution de méthanol/benzène/acide sulfurique (100/0,2/2, v/v/v) . Le spectre des acides gras était analysé en chromatographie gazeuse, utilisant un programme de température de 2,5° C/minute, de 135 à 210° Celsius et 18 minutes à 210° Celsius. La température de l'injecteur était de 260°. Celsius. Les gaz auxiliaires étaient l'hydrogène et l'air, le gaz vecteur était l'hélium. Une colonne capillaire de 50 m a été utilisée, sa phase stationnaire était du CPSIL 88.

L'analyse de variance a été utilisée pour comparer les moyennes des paramètres cliniques et biologiques. En cas d'effet période, cette analyse était complétée par un test de Newman-Keuls.

Les résultats du bilan clinique et biologique effectués avant l'étude, pendant la période du produit 1, pendant la période du produit 2, apparaissent dans le tableau 3 ci-dessous.

Cette étude met en évidence l'amélioration du rapport acides gras poly-insaturés / acides gras saturés, du régime alimentaire, en substituant les matières grasses saturées du fromage blanc par des graisses polyinsaturées conforme à l'invention, sans apporter d'autre modification dans l'alimentation habituelle des sujets. Ainsi le rapport acides gras poly-insaturés / acides gras saturés est passé de 0,39 à 0,85.

Ce régime a également entraîné des modifications de la distribution des acides gras sériques avec augmentation de l'acide linoléique et des dérivés de la série n-6 sans altération de la série n-3. Ce nouvel équilibre représente une meilleure prédisposition quant au risque athérogène, compte tenu de l'effet protecteur des acides gras poly-insaturés dans les processus métaboliques des cardiopathies ischémiques.

La traduction de cette meilleure prédisposition apparaît dans les modifications des lipides sanguins qui sont considérés comme les marqueurs biologiques du risque athérogène. Elle est objectivée chez les sujets hyperlipidémiques par la baisse du cholestérol total et chez les sujets normolipidémiques, par la baisse de l'apoprotéine B, bon indicateur de l'épuration du cholestérol. De plus, il existe une augmentation du cholestérol HDL chez les sujets normolipidémiques, ce qui est connu comme un rôle protecteur dans le développement des cardiopathies ischémiques. L'utilisation des graisses polyinsaturés conforme à l'invention constitue une modification limitée de l'alimentation habituelle, elle a toutefois entraînée des effets bénéfiques sur les principaux indices biologiques connus du risque athérogène.

La phase grasse de l'invention ainsi que les matières et produits alimentaires la contenant présentent des qualités diététiques très supérieures aux produits de remplacement proposés à ce jour.

La présente invention a été décrite au moyen d'exemples sans pour autant être limitée à la forme particulière de ces exemples. De nombreuses modifications peuvent être envisagées sans sortir de l'étendue de l'invention, notamment sur la nature du ou des huiles végétales.

**Revendications**

1 - Phase grasse comprenant au moins une huile végétale, caractérisée en ce qu 'elle présente les teneurs pondérales en acides gras essentiels suivantes :

- de 15 à 60 % de résidus acide linoléique,
- de 2 à 8 % de résidus acide linolénique,
- de 0,3 à 1 % de résidus acide gamma-linolénique,
- de 0,05 à 0,5 % de résidus acide stéaridonique.

2 - Phase grasse selon la revendication 1, caractérisée en ce que la teneur pondérale en acides gras mono-insaturés et poly-insaturés totalement en cis est comprise entre 70 et 100 %.

3 - Phase grasse selon l'une quelconque des revendications 1 et 2, caractérisée en ce que le rapport acide linoléique / acide linolénique est compris entre 5 et 12 et de préférence 8.

4 - Phase grasse selon l'une quelconque des revendications 1 à 3, caractérisée en ce qu'elle est constituée de 40 % huile de coton totalement hydrogénée, de 56 % d'huile de soja raffinée, interestérifiées au hasard et de 4 % d'huile de pépins de cassis, et en ce que sa composition pondérale en acides gras est la suivante :

| | |
|---|---|
| C 12:0 | 0 à 0,6 % |
| C 14:0 | 0 à 0,8 % |
| C 15:0 | 0 à 0,1 % |
| C 16:0 | 15 à 18 % |
| C 16:1 | |
| C 17:0 | 0 à 0,5 % |
| C 17:1 | |
| C 18:0 | 30 à 35 % |
| C 18:1 | 13 à 15 % |
| C 18:2 n-6 (acide linoléique) | 30 à 34 % |
| C 18:3 n-3 (acide linolénique) | 3,5 à 6 % |
| C 18:3 n-6 (acide gamma linolénique) | 0,5 à 0,8 % |
| C 20:0 | 0 à 0,5 % |
| C 20:1 | 0 à 0,1 % |
| C 22:0 | 0 à 0,5 % |
| C 18:4 n-3 (acide stéaridonique) | 0,1 à 0,16 % |

5 - Phase grasse selon l'une quelconque des revendications 1 à 3, caractérisée en ce qu'elle est constituée d'un mélange interestérifié de 60 % de concret de palme, de 36 % d'huile de soja raffinée et de 4 % d'huile de pépins de cassis, et en ce que sa composition pondérale en acides gras est la suivante :

| C 12:0 | 0 à 2 % |
|---|---|
| C 14:0 | 0,5 à 1,5 % |
| C 15:0 | 0 à 0,5 % |
| C 16:0 | 36 à 40 % |
| C 16:1 | |
| C 17:0 | 0 à 0,5 % |
| C 17:1 | |
| C 18:0 | 3 à 6 % |
| C 18:1 | 25 à 29 % |
| C 18:2 n-6 (acide linoléique) | 21 à 26 % |
| C 18:3 n-3 (acide linolénique) | 2 à 5 % |
| C 18:3 n-6 (acide gamma linolénique) | 0,5 à 0,8 % |
| C 20:0 | 0 à 0,5 % |
| C 20:1 | 0 à 0,5 % |
| C 22:0 | 0 à 0,5 % |
| C 18:4 n-3 (acide stéaridonique) | 0,1 à 0,16 % |

6 - Phase grasse selon l'une quelconque des revendications 1 à 3, caractérisée en ce qu'elle est constituée de 96 % d'huile de soja et de 4 % d'huile de pépins de cassis raffinées par démucilagination, neutralisation, décoloration et désodorisation sous vide, et en ce que sa composition pondérale en acides gras est la suivante :

| C 12:0 | traces |
|---|---|
| C 14:0 | 0 à 0,1 % |
| C 15:0 | traces |
| C 16:0 | 8 à 13 % |
| C 16:1 | |
| C 17:0 | 0 à 0,5 % |
| C 17:1 | |
| C 18:0 | 2,5 à 4,5 % |
| C 18:1 | 19 à 25 % |
| C 18:2 n-6 (acide linoléique) | 50 à 60 % |
| C 18:3 n-3 (acide linolénique) | 5,5 à 11 % |
| C 18:3 n-6 (acide gamma linolénique) | 0,5 à 0,8 % |
| C 20:0 | traces |
| C 20:1 | traces |
| C 22:0 | traces |
| C 18:4 n-3 (acide stéaridonique) | 0,1 à 0,16 % |

7 - Phase grasse selon l'une quelconque des revendications 1 à 3, caractérisée en ce qu'elle est constituée d'un mélange comprenant 50 % de la phase grasse selon la revendication 4 et 50 % de la phase grasse selon la revendication 6, et en ce que sa composition pondérale en acides gras est la suivante :

| | |
|---|---|
| C 12:0 | 0 à 0,3 % |
| C 14:0 | 0 à 0,4 % |
| C 15:0 | traces |
| C 16:0 | 11 à 16 % |
| C 16:1 | |
| C 17:0 | 0 à 0,5 % |
| C 17:1 | |
| C 18:0 | 16 à 20 % |
| C 18:1 | 16 à 21 % |
| C 18:2 n-6 (acide linoléique) | 40 à 50 % |
| C 18:3 n-3 (acide linolénique) | 5 à 9 % |
| C18:3 n-6 (acide gamma linolénique ) | 0,5 à 0,8 % |
| C 20:0 | 0 à 0,3 % |
| C 20:1 | 0 à 0,05 % |
| C 22:0 | 0 à 0,2 % |
| C18:4 n-3 (acide stéaridonique) | 0,1 à 0,16 % |

8 - Phase grasse selon l'une quelconque des revendications 1 à 3, caractérisée en ce qu'elle est constituée d'un mélange comprenant 75 % de la phase grasse selon la revendication 5 et 25 % de stéarine de palmiste, et en ce que sa composition pondérale en acides gras est la suivante :

| | |
|---|---|
| C 12:0 | 13 à 17 % |
| C 14:0 | 4 à 8 % |
| C 15:0 | 0 à 0,5 % |
| C 16:0 | 30 à 34 % |
| C 16:1 | |
| C 17:0 | 0 à 0,5 % |
| C 17:1 | |
| C 18:0 | 3 à 5 % |
| C 18:1 | 20 à 44 % |
| C 18:2 n-6 (acide linoléique) | 15 à 20 % |
| C 18:3 n-3 (acide linolénique) | 1,5 à 4 % |
| C 18:3 n-6 (acide gamma linolénique | 0,37 à 0,60 |
| C 20:0 | 0 à 0,5 % |
| C 20:1 | 0 à 0,3 % |
| C 22:0 | 0 à 0,5 % |
| C 18:4 n-3 (acide stéaridonique) | 0,075 à 0,12 % |

9 - Phase grasse selon l'une quelconque des revendications 1 à 3, caractérisée en ce qu'elle comprend au moins une huile d'origine végétale et au moins une huile d'origine animale.

10 - Phase grasse selon la revendication 9, caractérisée en ce que l'huile d'origine animale est une huile de poisson riche en acides gras poly-insaturés de la série n-3.

11 - Phase grasse selon l'une quelconque des revendications 1 à 10 caractérisée en ce qu'elle comprend au moins un additif choisi dans le groupe consistant en un agent anti-oxygène, un colorant, un arôme, un émulsifiant, des vitamines.

12 - Phase grasse selon l'une quelconque des revendications 1 à 11, caractérisée en ce qu'elle oomprend au moins un agent anti-oxygène, le ou les agents anti-oxygènes sont choisis parmi notamment les tocophérols, le palmitate d'ascorbyle.

13 - Matière alimentaire comparable à une crème contenant au moins une phase grasse selon l'une quelconque des revendications 1 à 12.

14 - Matière alimentaire selon la revendication 13, caractérisée en ce qu 'elle présente un pH compris entre 6,55 et 6,80, une acidité comprise entre 9 et 11° Dornic, un extrait sec total compris entre 36 et 37 % et en ce qu'elle contient environ 30 % de matière grasse dont la composition pondérale en acides gras présente les caractéristiques suivantes :
ACIDES GRAS SATURES : 13 à 38 %
ACIDES GRAS MONO-INSATURES : 18 à 26 %
ACIDES GRAS POLY-INSATURES : 43 à 66 %
dont
- acide linoléique : 39 à 56 %
- acide linolénique : 4 à 9 %
- acide gamma linolénique : 0,5 à 0,8 %
- acide stéaridonique : 0,1 à 0,16 %

15 - Matière alimentaire selon la revendication 13, caractérisée en ce qu 'elle présente un pH compris entre 6,70 et 6,80, une acidité comprise entre 10 et 12° Dornic, un extrait sec total compris entre 40 et 51 %, et en ce qu'elle contient environ 35 à 45 % de matière grasse dont la composition pondérale en acides gras présente les caractéristiques suivantes :
ACIDES GRAS SATURES : 12 à 15 %
ACIDES GRAS MONO-INSATURES : 20 à 25 %
ACIDES GRAS POLY-INSATURES : 60 à 65 %
dont

- acide linoléique : 50 à 60 %
- acide linolénique : 5,5 à 11 %
- acide gamma linolénique : 0,5 à 0,8 %
- acide stéaridonique : 0,10 à 0,16 %

16 - Matière alimentaire selon la revendication 13, caractérisée en ce qu'elle présente un pH compris entre 6,60 et 6,70, une acidité comprise entre 10 et 12° Dornic, un extrait sec total compris entre 43 et 48 %, et en ce qu'elle contient environ 30 à 35 % de matière grasse dont la composition pondérale en acides gras présente les caractéristiques suivantes :
ACIDES GRAS SATURES : 52 à 65 %
ACIDES GRAS MONO-INSATURES : 12 à 25 %
ACIDES GRAS POLY-INSATURES : 16 à 28 %
dont
- acide linoléique : 15 à 25 %
- acide linolénique : 0,8 à 4 %
- acide gamma linolénique : 0,37 à 0,60 %
- acide stéaridonique : 0,075 à 0,12 %

17 - Matière alimentaire comparable à une crème douce U.H.T., selon la revendication 13, caractérisée en ce qu'elle présente un pH compris entre 6,55 et 6,80, une acidité comprise entre 8 et 12° Dornic, un extrait sec total compris entre 43 et 46 % et en ce qu'elle contient environ 35 % de matière grasse dont la composition pondérale en acides gras présente les caractéristiques suivantes :
ACIDES GRAS SATURES : 52 à 65 %
ACIDES GRAS MONO-INSATURES : 12 à 25 %
ACIDES GRAS POLY-INSATURES : 16 à 28 %
dont :
- acide linoléique : 15 à 25 %
- acide linolénique : 0,8 à 4 %
- acide gamma linolénique : 0,37 à 0,60 %
- acide stéaridonique : 0,075 à 0,12 %

18 - Procédé de préparation d'une matière alimentaire selon l'une quelconque des revendications 13 à 17, caractérisé en ce que l'on effectue les étapes suivantes :
a - on mélange les deux phases suivantes :
- une phase aqueuse constituée par du lait écrémé ou partiellement écrémé, pasteurisé ou microfiltré et/ou de la crème laitière crue ou pasteurisée, contenant éventuellement un ou plusieurs additifs comme des arômes ,du sucre, des agents gélifiants, épaississants, stabilisants ou colorants.
- une phase grasse conforme à l'une quelconque des revendications 1 à 12.
b - on homogénéise le mélange ramené à une température comprise entre 70 et 78° Celsius, en le soumettant à une pression comprise entre 0 et 150 bar
c - on soumet ledit mélange à une pasteurisation à une température comprise entre 90 et 110° Celsius pendant une durée comprise entre 10 et 50 secondes ou a une température comprise entre 100 et 120° Celsius pendant une durée d'environ 80 secondes.
d - on refroidit le mélange à une température d'environ 4° à 6° Celsius.

19 - Procédé selon la revendication 18, caractérisé en ce que les étapes (a) et (d) et le stockage sont effectués sous atmosphère inerte.

20 - Produit alimentaire lacté, caractérisé en ce qu'il contient au moins une phase grasse conforme à l'une des revendications 1 à 12 et/ou au moins une matière alimentaire conforme à l'une des revendications 13 à 17.

21 - Produit alimentaire lacté comparable à un fromage de type Cheddar, selon la revendication 20, caractérisé en ce qu'il présente un pH compris entre 5,30 et 5,40, un extrait sec total compris entre 62 et 63 %, un rapport gras sur sec compris entre 50 et 52 % et en ce que sa composition pondérale en acides gras présente les caractéristiques suivantes :
ACIDES GRAS SATURES : 13 à 38 %
ACIDES GRAS MONO-INSATURES : 18 à 26 %
ACIDES GRAS POLY-INSATURES : 43 à 66 %
dont :
- acide linoléique : 39 à 56 %
- acide linolénique : 4 à 9 %
- acide gamma linolénique : 0,5 à 0,8 %
- acide stéaridonique : 0,10 à 0,16 %

**22** - Produit alimentaire lacté comparable à un fromage blanc, selon la revendication 20, caractérisé en ce qu'il présente un pH compris entre 4,40 et 4,60, un extrait sec total compris entre 20 et 22 %, un rapport gras sur sec compris entre 40 et 42 % et en ce que sa composition pondérale en acides gras présente les caractéristiques suivantes :

ACIDES GRAS SATURES : 10,5 à 18,5 %

ACIDES GRAS MONO-INSATURES : 19 à 25 %

ACIDES GRAS POLY-INSATURES : 55 à 70 %

dont :

- acide linoléique : 50 à 60 %

- acide linolénique : 5,5 à 11 %

- acide gamma linolénique : 0,5 à 0,8 %

- acide stéaridonique : 0,10 à 0,16 %

**23** - Produit alimentaire lacté comparable à un fromage aromatisé avec des pulpes de fruits sur sucre ou édulcorant, selon la revendication 20, caractérisé en ce qu'il présente un pH compris entre 4,40 et 4,60, un extrait sec total compris entre 26,5 et 28 %, un rapport gras sur sec compris entre 30 et 35 % et en ce que sa composition pondérale en acides gras présente les caractéristiques suivantes :

ACIDES GRAS SATURES : 10,5 à 18,5 %

ACIDES GRAS MONO-INSATURES : 19 à 25 %

ACIDES GRAS POLY-INSATURES : 55 à 70 %

dont :

- acide linoléique : 50 à 60 %

- acide linolénique : 5,5 à 11 %

- acide gamma linolénique : 0,5 à 0,8 %

- acide stéaridonique : 0,10 à 0,16 %

**24** - Produit alimentaire lacté comparable à un fromage blanc, selon la revendication 20, caractérisé en ce qu'il présente un pH compris entre 4,40 et 4,60, un extrait sec total compris entre 20 et 22 %, un rapport gras sur sec compris entre 40 et 42 % et en ce que sa composition pondérale en acides gras présente les caractéristiques suivantes :

ACIDES GRAS SATURES : 23,5 à 36 %

ACIDES GRAS MONO-INSATURES : 20,0 à 28,5 %

ACIDES GRAS POLY-INSATURES : 40 à 50 %

dont :

- acide linoléique : 36 à 43 %

- acide linolénique : 4 à 8 %

- acide gamma linolénique : 0,5 à 0,8 %

- acide stéaridonique : 0,10 à 0,16 %

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 092 076 (NESTLE S.A.) * Exemples 1,3,4,5; revendications * | 1,2,11, 12 | A 23 D 9/00 A 23 C 19/055 A 23 C 19/093 A 23 G 9/02 A 23 L 1/19 |
| X | EP-A-0 092 085 (NESTLE S.A.) * Exemples 16,17; page 3, lignes 23-28 * | 1,2,11, 12 | |
| X | EP-A-0 319 360 (VERNIN) * Colonne 2, lignes 43-52; revendications 1,7 * | 1,9,10 | |
| A | US-A-3 889 004 (SCHMIDT et al.) * Colonne 3, lignes 29-48; colonne 6, lignes 5-67; exemples 1-10; tableaux 1,3,6; revendications 1,6,11,12 * | 1,4,5,7 -10,13- 24 | |
| A | CONFECTIONERY PRODUCTION, vol. 51, no. 7, juillet 1985, pages 403-404, Surbiton, Surrey, GB; K. LAUTSEN et al.: "Vegetable fats in the dairy industry" | | |
| A | US-A-3 278 313 (K.H. RHODES et al.) | | |
| A | FR-A-2 245 291 (AE & CI LTD) | | |

| DOMAINES TECHNIQUES RECHERCHES (Int. Cl.5) |
|---|
| A 23 D A 23 G A 23 L A 23 C C 11 C |

Le présent rapport a été établi pour toutes les revendications

| Lieu de la recherche | Date d'achèvement de la recherche | Examinateur |
|---|---|---|
| LA HAYE | 13-02-1991 | LEPRETRE F.G.M.J. |